# EUROPÄISCHE PATENTSCHRIFT

(11) **EP 0 623 482 B1**
(45) Veröffentlichungstag und Bekanntmachung des Hinweises auf die Patenterteilung: **02.04.1997**
(21) Anmeldenummer: 94107055.9
(22) Anmeldetag: 05.05.1994
(51) Int. Cl.: B60B 33/08, B60B 33/00

(54) **Radfelge**
Rim
Jante

(30) Priorität: 05.05.1993 DE 9306775 U
(43) Veröffentlichungstag der Anmeldung: 09.11.1994
(73) Patentinhaber: LIPPISCHE FELGEN- UND SCHUTZBLECHFABRIK HANS KERKHOFF GmbH & Co. KG, D-32107 Bad Salzuflen (DE)
(72) Erfinder: Kerkhoff, Fritz-Georg, Dipl.-Kfm., D-32105 Bad Salzuflen (DE); Mäkelburg, Wolfgang, D-32791 Lage (DE); Rötger, Willi, D-32791 Lage (DE)
(74) Vertreter: Weber, Joachim, Dr.

(56) Entgegenhaltungen:
- DE-U- 9 302 974
- US-A- 3 871 709
- US-A- 4 930 844
- PATENT ABSTRACTS OF JAPAN vol. 6, no. 267 (M-182) 25. Dezember 1982 & JP-A-57 158 104 (NANSHIN GOMU KOGYOSHO) 29. September 1982
- PATENT ABSTRACTS OF JAPAN vol. 13, no. 446 (M-877) 6. Oktober 1989 & JP-A-01 172 001 (MATSUDA BUHIN KOGYO)

## Beschreibung

Die Erfindung bezieht sich auf eine Radfelge mit Nabenkörper für Fahrzeuge,Geräte o.dgl. wie Karren,Wagen,Mäher,Meßräder ,Landmaschinen,Kinder-,Kranken- und Transportfahrzeuge,Spiel-,Sport-Freizeit-u.Hobbygeräte usw.

Eine solche Radfelge besteht aus zwei miteinander verbundenen Radplatten (Felgenhälften) mit im Zentrum direkt angeformter Nabenkörperaufnahme,die zur Felgenmitte (nach"innen"zeigend)angeordnet sind und gleichzeitig den Felgenbett-Grund bilden und die Aufnahme für den Nabenkörper aufweisen.

Bei bekannten Radfelgen,bei denen von der Felgenmitte aus nach "außenliegende"Aufnahmen in den unterschiedlichsten Lageraufnahme-Durchmessern und unterschiedlichen Lageraufnahme-Längen angeformt sind,ist es daher notwendig,für diese unterschiedlichsten Nabenausbildungen eine Vielzahl von Radfelgen herzustellen und auf Lager zu halten,um den Anforderungen der verschiedenen Verbraucher gerecht zu werden.

Die US-A-4,930,844 zeigt ein Rad, insbesondere für ein Fahrrad, welches aus Kunststoff gefertigt ist und einstückig, beispielsweise durch ein Spritz-Verfahren hergestellt ist. Einstückig mit den Speichen ist eine Nabe ausgebildet, in welche ein Lager einsetzbar ist. Das Rad weist den Nachteil auf, daß es in relativ aufwendiger Fertigung nur in einer einzigen Dimensionierung und, bezogen auf die hohen Werkzeugkosten, nur in großen Stückzahlen wirtschaftlich herstellbar ist.

Aufgabe der Erfindung ist es,eine Radfelge der vorgenannten Gattung zu schaffen, die aus wenigen Standartmodellen besteht,jeweils zum Einbau eines Nabenkörpers mit unterschiedlichen Lagermitteln (Gleit-,Rollen-,Kugellager o.dgl) geeignet ist und die damit bei geringer Lagerhaltung jede gewünschte Nabenkörpermontage gestattet.

Erfindungsgemäß wird die Aufgabe durch die Merkmale des Hauptanspruchs gelöst.

Die Unteransprüche zeigen weitere vorteilhafte Ausgestaltungen der Erfindung.

Ein derartiger zweiteiliger Nabenlagerkörper ergänzt bisher bekannte,mit zwei Radplatten ausgestattete Radfelgen,die in nachteiliger Weise mit einer Vielzahl von Lageraufnahmen mit unterschiedlichen Hülsen,Längen,Durchmessern,mit unterschied-Rollen-und Kugellagern für die unterschiedlichsten Zwecke jeweils hergestellt werden müssen,in vorteilhafter Weise ,daß dadurch die große Anzahl von Ausführungen für die verschiedensten Verwendungszwecke verringert werden kann.Es ist herstellungs-und lagerhaltungsmäßig einfacher,wenige mit im Innenbereich verschiedenen Nabenlagerkörper (Achslager o.dgl.) für wenige Standartfelgenräder vorzusehen, die dann beim Zusammenbau der Vielzahl von Abmessungen,Lagerungen usw. gerecht werden.

Die erfindungsgemäßen Nabenlagerkörper werden bevorzugt aus Kunststoff,Alu-Druckguß,Sintermetall hergestellt,die dann durch einfaches Eindrücken in die große Nabenkörperaufnahme der Standardradfelgen auswechselbar oder fest eingebaut werden können.

Dazu sind diese zweiteiligen Nabenlagerkörper mit Ringkammern ausgestattet,die materialsparend mit radial angeordneten Rippen versehen sein können und eine hervorragende Festigkeit zeigen.

Weiterhin ist es bevorzugt,die beiden Einzelteile jedes Nabenlagerkörpers spiegelbildlich (symmetrisch) zu gestalten,wobei die nach außen vorstehenden Teile konisch verjüngt sein können.

Es liegt aber auch im Rahmen der Erfindung,die beiden Teile des Nabenlagerkörpers mit Haken auszustatten,die nach innen vorstehen und entweder hinter einen inneren mittleren Anlagering wie Falzring oder wechselweise sich selbst hinterfassen können.

Derartige innere mittlere Anlageringe lassen sich in vorteilhafter und bevorzugter Weise durch Falzen,Walzen (Umbördeln) herstellen,wobei jeweils innere Ringstreifen sich gegenüberliegend an den Radplatten vorstehen und abgewinkelt werden.

Diese Anlageringe können jedoch auch mittels Schweißnähten, aber auch z.B. durch Nietung,Verschraubung oder Eigenblech-Vernietung verbunden werden.

Bei z.B. luftbereiften Radfelgen ist es vorteilhaft,eine Schweißverbindung vorzusehen.Hierbei können dann schlauchlose Bereifungen montiert werden.

Bei Verwendung "Reifen mit Schlauch" ist es vorteilhaft,die Schweißnaht innenliegend anzuordnen.Hierdurch kann die Kontrolle der Schweißnaht auf Schweißspritzer entfallen,da der Schlauch der L uftbereifung nicht mit der Schweißnaht in Berührung kommt und damit aucvh keine Beschädigung des Schlauches hierbei auftreten kann.

Auf der Zeichnung sind Ausführungsbeispiele der Erfindung dargestellt.Es zeigen :
- Fig.1 -3: einen Querschnitt durch eine Radfelge mit jeweils abgeänderter Schweißnaht an den nach innen liegenden Lagertopfprägungen aus Eigenblech (Lageraufnahme,
- Fig.4: einen Querschnitt durch eine Radfelge gemäß Fig.3 mit Nabenlagerkörper und inneren Klemmringen,
- Fig.5: einen Querschnitt durch dieselbe Radfelge gemäß Fig.3 mit ebenfalls zweiteiligem Nabenlagerkörper mit abgestufter Achslagerhülse,
- Fig.6: einen Querschnitt durch eine Radfelge mit abgeschrägtem Felgenbett und innerem ebenfalls zweigeteilten Nabenlagerkörper mit jeweils einer Achslagerhülse,
- Fig.7: einen Querschnitt durch dieselbe Radfelge gemäß Fig.3 mit verkürztem Nabenlagerkörper,
- Fig.8: einen Querschnitt durch dieselbe Radfelge mit asymmetrischen, Nabenlagerkörper,
- Fig.9: einen Querschnitt durch dieselbe Radfelge gemäß Fig.3 mit umgebördeltem Innenanschlag,
- Fig.10: einen Querschnitt durch eine Radfelge gemäß Fig.3,jedoch mit gefalztem Eigenblech-Innenring,
- Fig.11: einen Querschnitt durch eine Radfelge gemäß Fig.3 mit doppeltem Falz des Eigenblech-Innenringes,
- Fig.12: eine Querschnitt durch eine Radfelge gemäß Fig.6 mit doppeltem Falz des Innenringes gemäß Fig.11 und Lagerhülse gemäß Fig.4,
- Fig.13: einen Querschnitt durch eine Radfelge gemäß Fig.3 mit waagerechtem Falz,
- Fig.14: einen Querschnitt durch eine Radfelge gemäß Fig.6 mit U-förmigem Falz-Innenring,
- Fig.15: einen Querschnitt durch eine Radfelge gemäß Fig.6 mit nach außen umgebördelten Randstreifen des Falz-Innenringes,
- Fig.16: einen Querschnitt durch eine Radfelge gemäß Fig.6 mit Anlageringen vernietet(Halbrundkopfnieten),
- Fig.17: einen Querschnitt durch eine Radfelge gemäß Fig.3 mit abgeändertem Nabenlagerkörper mit innenliegendem Rollenlager und eingesetzter Achse,
- Fig.18: einen Querschnitt durch eine Radfelge gemäß Fig.3 mit abgeändertem Nabenlagerkörper mit Rolle nlager und eingesetzter Achse,
- Fig.19: einen Querschnitt durch eine Radfelge gemäß Fig.3 mit Rollenlager und Achshülse mit geteiltem Nabenlagerkörper,
- Fig.20: einen Querschnitt durch eine Radfelge gemäß Fig.3 mit Rollenlager,umgebender Lagerhülse und geteiltem Nabenlagerkörper mit Klemmhaken,
- Fig 21: einen Querschnitt durch eine Radfelge gemäß Fig.3 mit zweigeteilter Lagerhülse mit Kugellager und geteiltem Nabenlagerkörper mit Klemmhaken,
- Fig.22: einen Querschnitt durch eine abgeänderte Radfelge mit gefalztem Eigenblech-Innenring mit Nabenlagerkörper für eine Bremstrommel,
- Fig.23: eine Seitenansicht derselben Radfelge gemäß Fig.22 mit Bremstrommelbelag,
- Fig.24: einen Querschnitt durch eine Lageraufnahme in Achtkantform aus zwei durch Falze miteinander verbundenen Felgenscheiben für eine Antriebs-oder Bremsradfelge,
- Fig.25: eine Seitenansicht derselben Lageraufnahme gemäß Fig.24,
- Fig.26: einen Querschnitt durch einen Nabenlagerkörper ,
- Fig.27: eine Seitenansicht desselben Nabenlagerkörpers in Sechskantform,
- Fig.28: eine Teil-/Schnittansicht eines weiteren Ausführungsbeispiels eines erfindungsgemäßen Rades, und
- Fig.29: eine Seitenansicht des in Figur 28 gezeigten Rades.

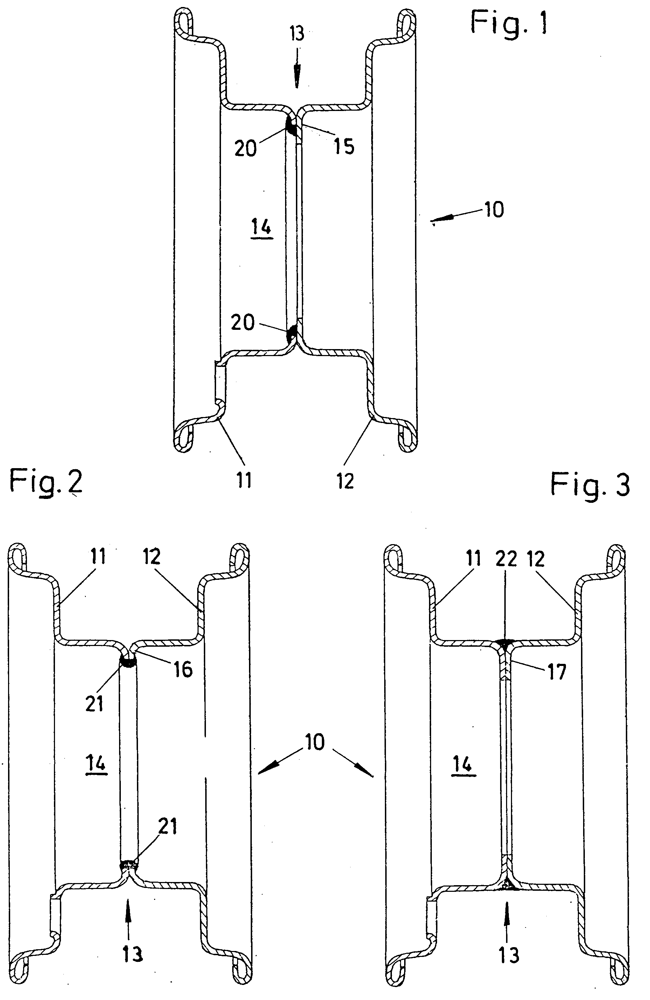

Mit (10) ist in den Fig.1 bis 3 jeweils eine Radfelge aus zwei miteinander verschweißten Radplatten (Felgenscheiben) (11,12) bezeichnet,die außenseitig ein Felgenbett (13) zur Aufnahme eines Reifens bekannter Bauart wie Vollreifen,Luftreifen o.dgl. (nicht dargestellt) und im Zentrum eine zylindrische Lageraufname (14) für eine Nabe,Achse o.dgl. aufweisen.Beide Radplatten (11,12) sind zu einer besonderen Lageraufnahme jeweils mit einem Anlagering( 15-17) unter Bildung einer abgewinkelten Lagertopfprägung ausgestattet,die gleichlang oder unterschiedlich lang in die Lageraufnahme (14) vorstehen und jeweils mittels einer seitlichen Schweißnaht (20) Fig.1,einer inneren Schweißnaht (21) Fig.2 oder einer äußeren Schweißnaht (22) fest miteinander verbunden sind.

Dabei sind die Felgenbetten (13) in ihrem Querschnitt U-förmig abgewinkelt.

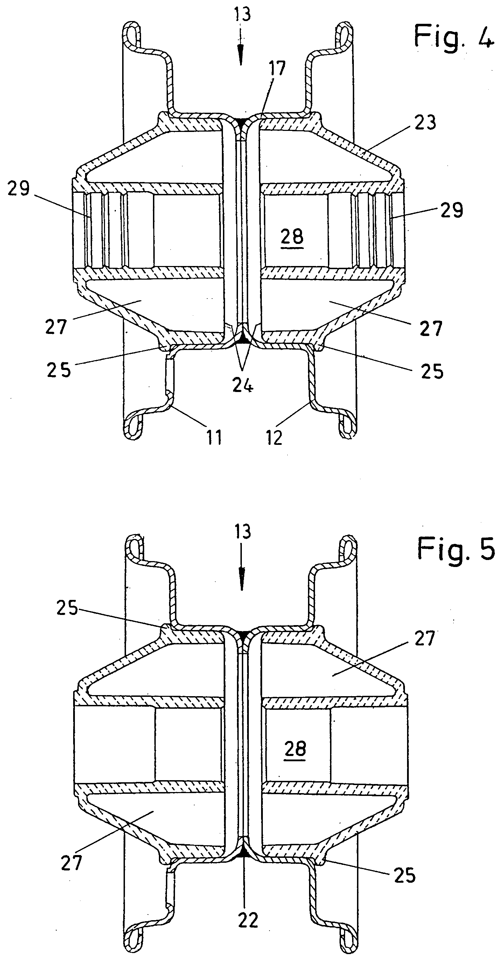

Bei der Ausführungsform gemäß Fig.4 ist in den zentralen Aufnahmeraum der beiden Radplatten (11,12) ein zweiteiliger Nabenlagerkörper (23) eingedrückt,dessen innere Stirnflächen (24) vor dem mittleren inneren Anlagering (17)enden und mit einer im Mittelbereich nach außen vorstehenden Ringwulst(25) an der inneren Kante des Felgenbettes (13) arretierend anliegt.Die beiden Teile des Nabenlagerkörpers (23) sind spiegelbildlich ausgebildet und laufen nach außen konisch (sich verjüngend) zu und stehen über den Radplatten (11,12) etwas vor.Jeweils umgibt eine Ringkammer (27) die innere zylindrische Lageraufnahme (28),die jeweils mit drei inneren etwas vorstehenden Dichtringen (29)ausgestattet sind.

Die weitere Ausführungsform gemaß Fig.5 stimmt weitgehend mit der Ausführung gemäß Fig.4 überein;es fehlen jedoch die Dichtringe (29) gemäß Fig.4.

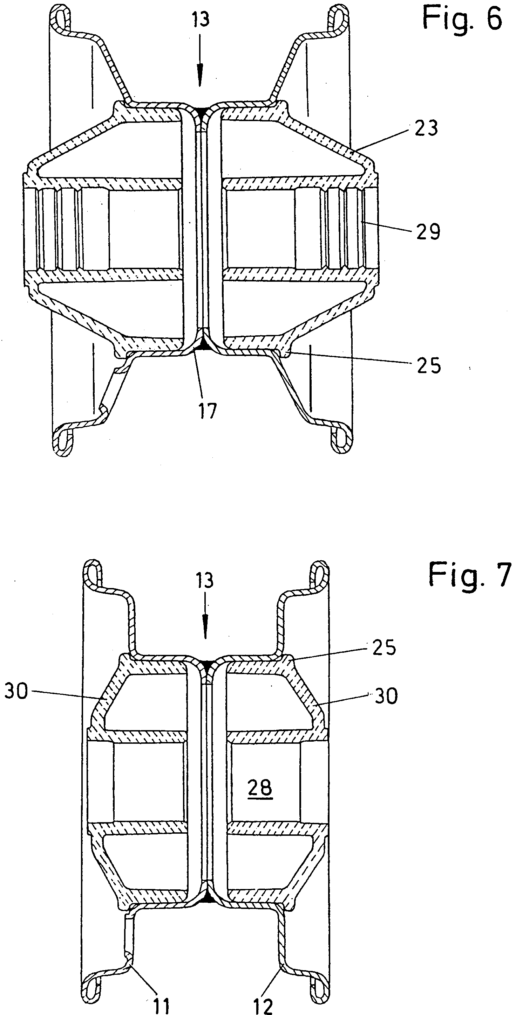

Bei der Ausführung gemäß Fig.6 sind bei sonstiger Übereinstimmung mit der Ausführung gemäß Fig.4 die Seitenflächen des Felgenbettes(26) schräggstellt.

Bei der Ausführung gemäß Fig.7 ist der zweiteilige Nabenlagerkörper (30) verkürzt und entspricht aber sonst der Ausführung gemäß Fig.5.

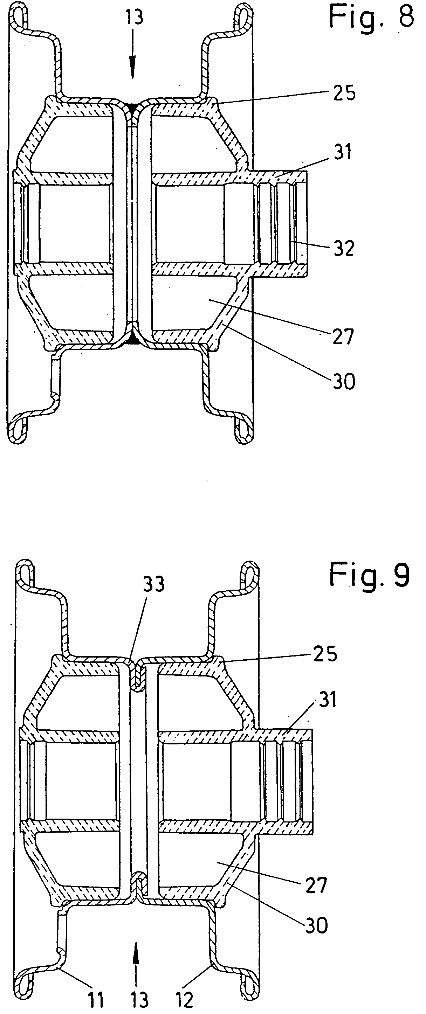

Der zweiteilige Nabenlagerkörper (30) gemäß Fig.8 ist verkürzt, stimmt aber sonst mit der Ausführung gemäß Fig.7 weitgehend überein..Er ist aber unsymmetrisch und zeigt einseitig einen zylindrischen Vorstand (31) mit den Dichtringen (32).

Bei dem Ausführungsbeispiel gemäß Fig.9 entspricht der Nabenlagerkörper demjenigen gemäß Fig.8,jedoch sind die beiden Radplatten (11,12) mittels einer Umbördelung (eines Falzes) (33) miteinander verbunden.

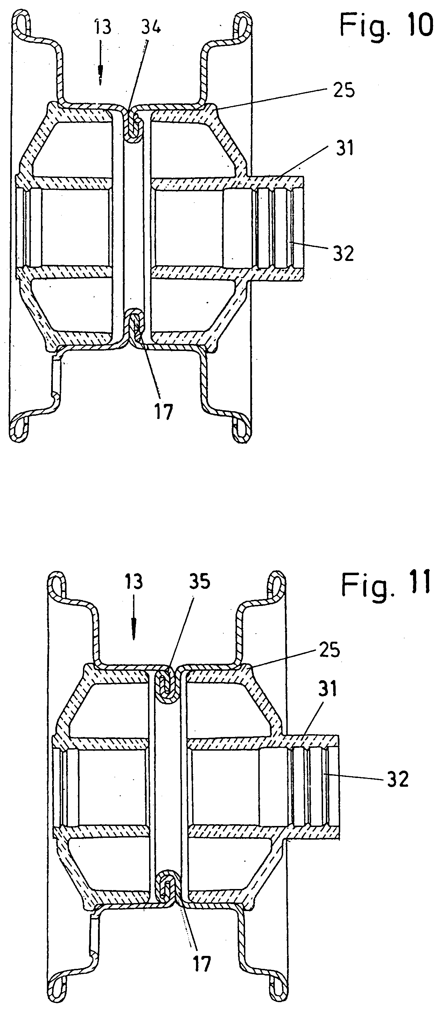

Bei der Ausführung gemäß Fig.10 und 11 stimmen die Einzelmerkmale weitgehend überein bis auf die Ausbildung des Falzes (als Doppelfalz)(34) bezw. (35) auf sich gegenüberliegenden Seiten des Anlageringes (17).

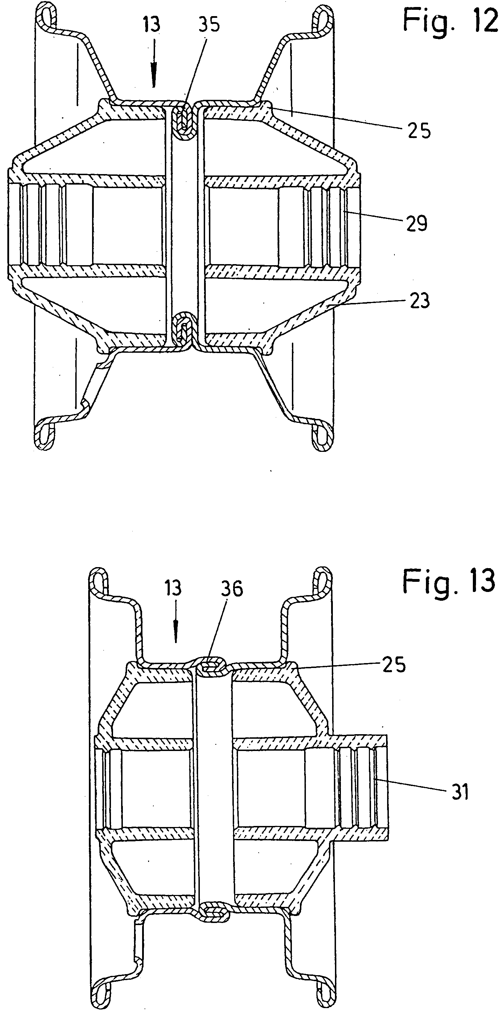

Die Ausführung nach Fig.12 ist eine Zusammenkonstruktion von Fig.11 in Verbindung mit den Fig.6 und 4.

Die Ausführung gemäß Fig.13 entspricht in etwa der Fig.8 mit einem liegenden Falz (36).

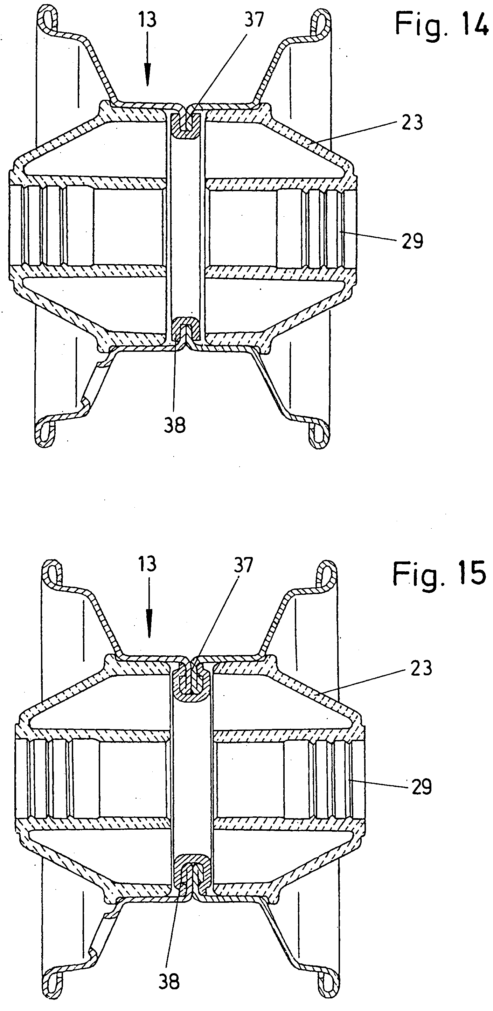

Bei den Ausführungen gemäß Fig.14 und 15 sind die Anlageringe(37) mittels U-förmiger gesonderter Spannringe (38)überfaßt.Ansonsten entsprechen diese Figuren der Ausführung gemäß Fig.6.

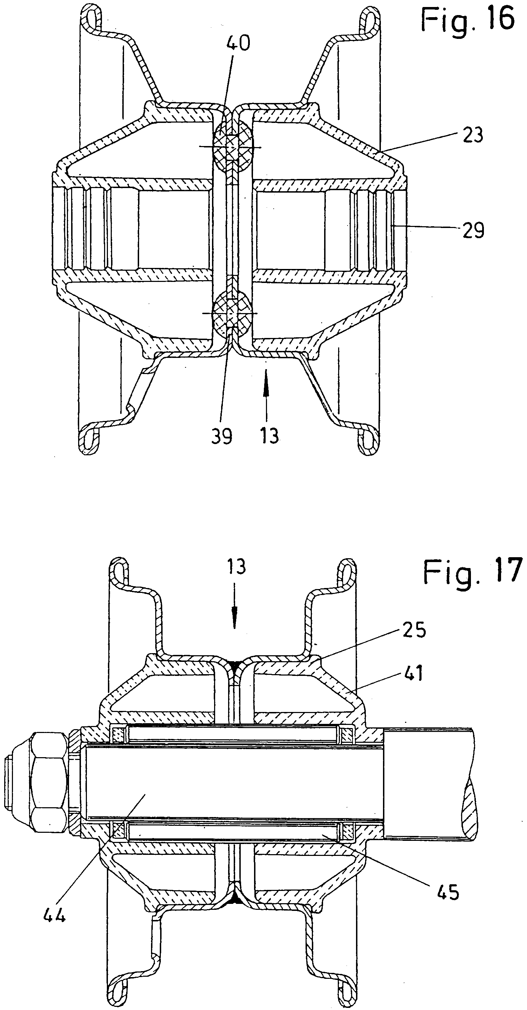

Bei dem Ausführungsbeispiel gemäß Fig.16 sind die etwas breiter gehaltenen Anlageringe (39) mittels Halbrundkopfnieten (4) miteinander verbunden.

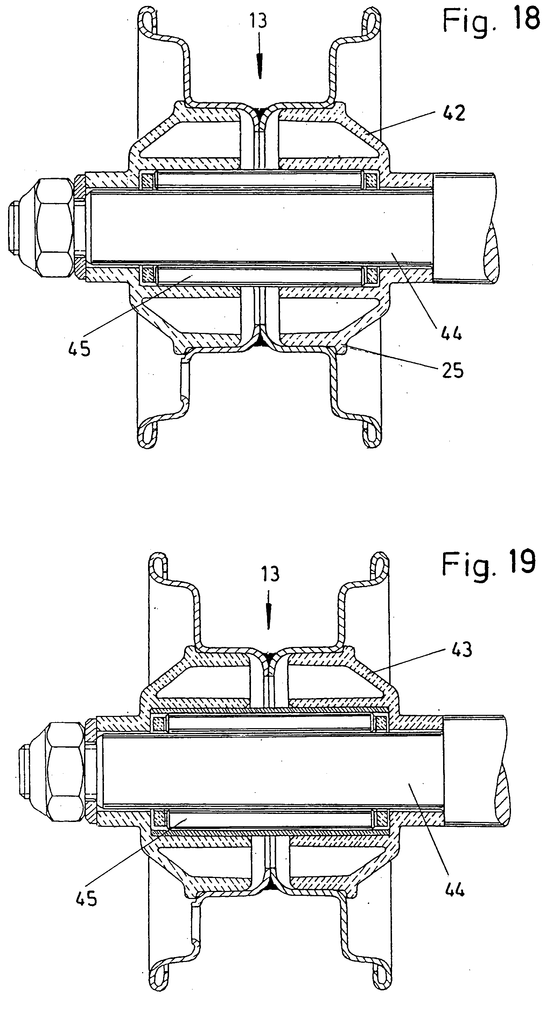

Bei den Ausführungen gemäß Fig. 17 bis 20 nehmen die zweiteiligen schmaleren Nabenlagerkörper (41-43) jeweils eine Achse (44) auf,die mittels Rollen (45) gelagert ist.

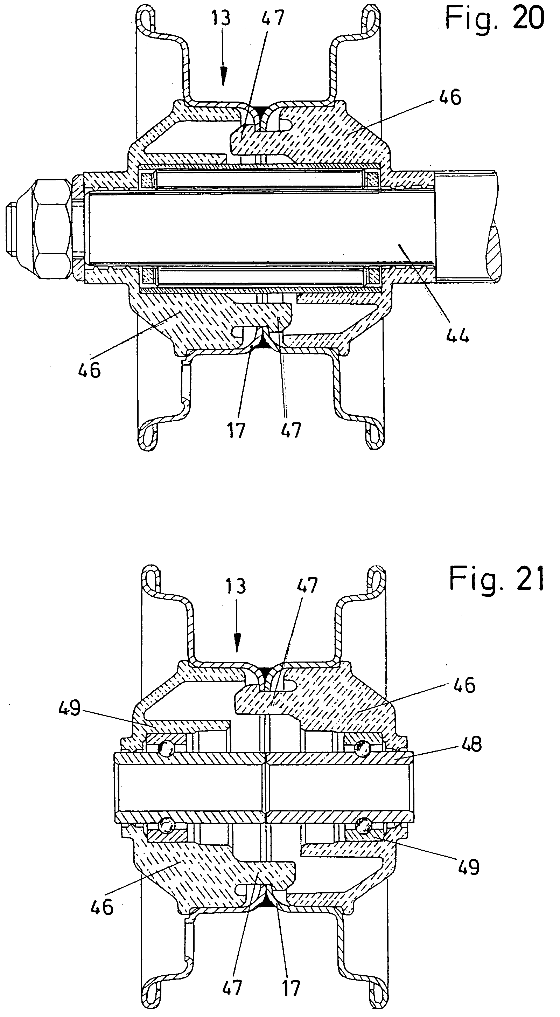

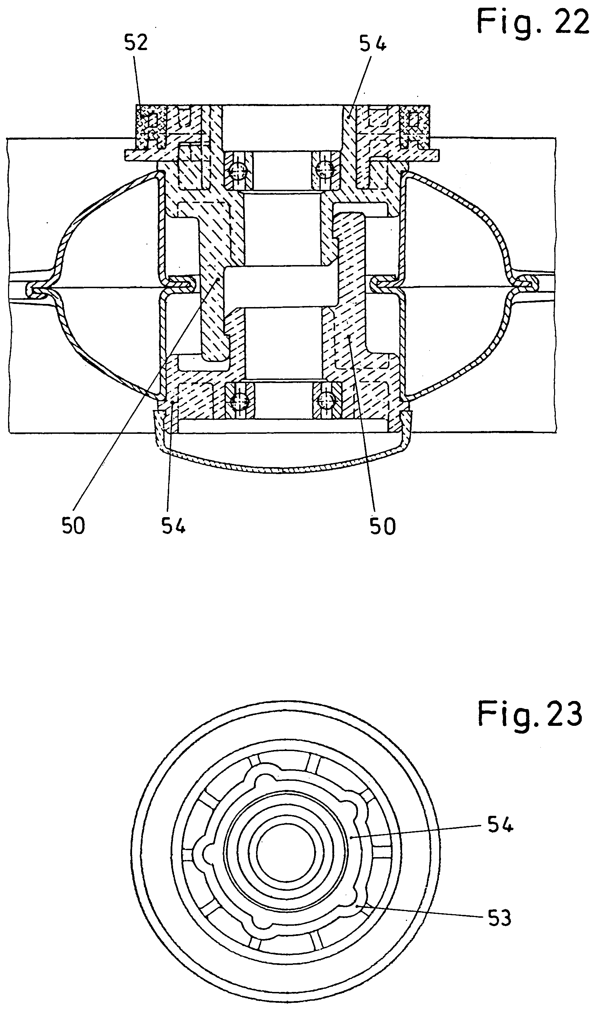

Bei den Ausführungen gemäß Fig.20 und 21 sind die beiden Nabenlagerkörper (46) dahingehend übereinstimmend,daß jede Hälfte mit einem elastischen Klemmhaken (47) ausgestattet ist,die versetzt zueinander wechselweise hinter den Anlagering (17) gemäß Fig.3 faßen und damit arretiert sind.

In Fig.21 ist eine Lagerhülse (48) dargesteltt,die in Kugellagern (49) ruht.

Die Ringkammern (27) in den Nabenlagerkörpern sind mit radial angeordneten Rippen versehen.Diese können aus Kunststoff, Alu-Druckguß oder aus Sintermetall o.dgl. gefertigt sein,sodaß sie mit gutem Paßsitz in der Radfelge festgehalten sind,jedoch aber auch z.B. bei Beschädigung ausgewechselt werden können.

Bei der abgeänderten Ausführungsform in Fig.22 und 23 ist ein Nabenlagerkörper für Bremstrommeln gezeigt,bei dem einerseits -in ähnlicher Ausbildung wie in Fig.20,21-die elastischen Klemmhaken (50) der beiden Nabenlagerkörper verlängert sind und wechselseitig aneinanderasten und andererseits der Bremstrommelbelag (52) außen an einer mit Nocken (53) ausgestatteten Hülse (54) vorsteht.

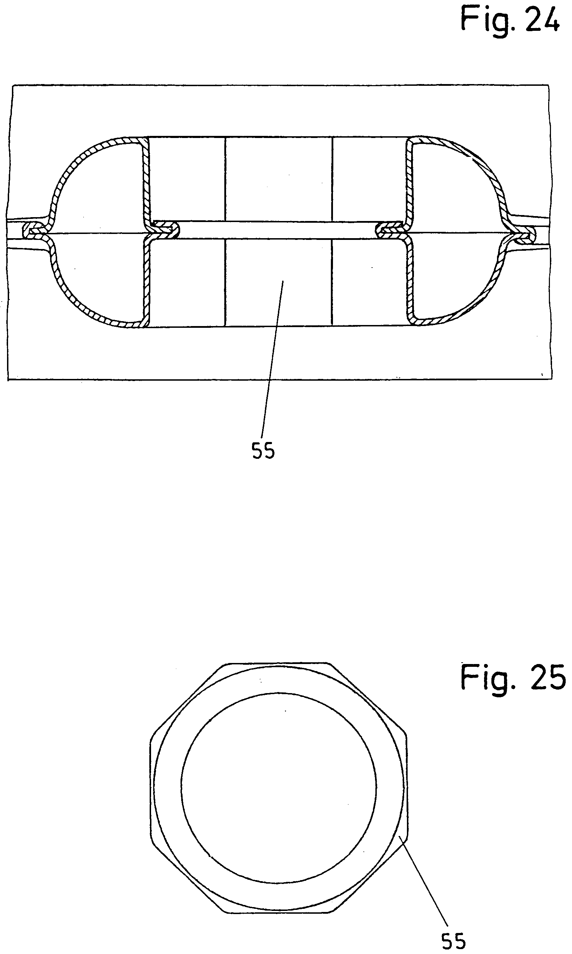

Die Ausführung einer Antriebs-oder Bremsradfelge gemäß Fig.24 und Fig.25 hat eine innere Lageraufnahmefläche (55) in Achtkantform ,die beiderartigen Radfelgen vorteilhaft ist.

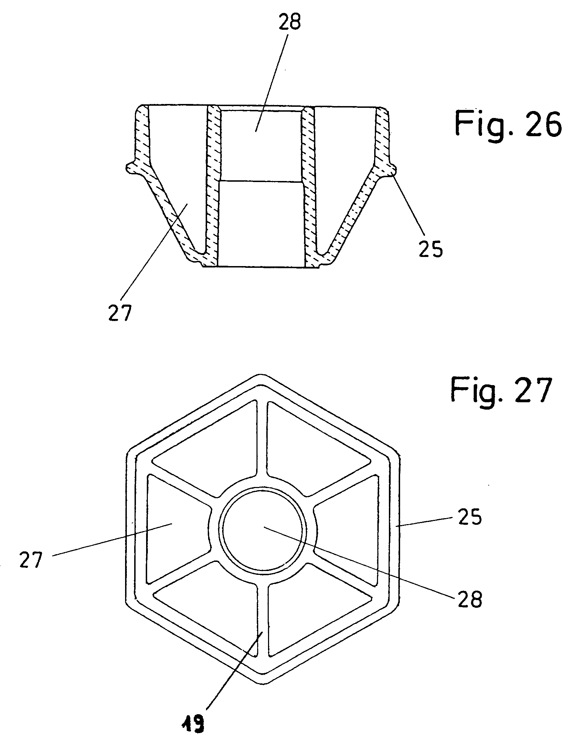

Der Nabenlagerkörper gemäß Fig.26 und Fig.27 zeigt eine Lageraufnahmefläche in Sechskantform.

Die vorliegende Erfindung in ihren verschiedenen Ausführungsmöglichkeiten bezieht sich vorzugsweise auf solche Radfelgen,Hohlkammerreifen oder Luftreifen die bis 6 km/h bezw. 25 km/h und mit einer Tragkraft bis zu etwa 350 kg ausgerüstet sind.

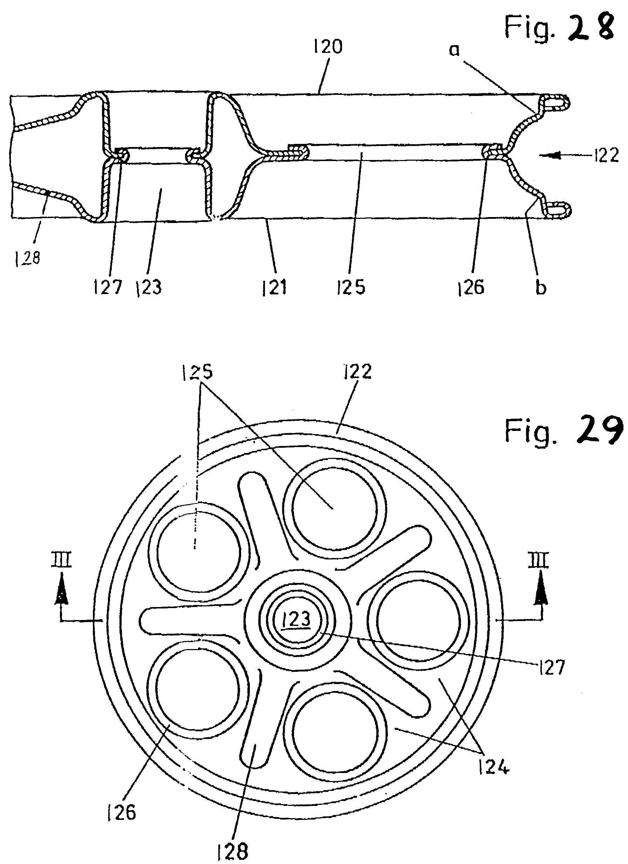

Die Figuren 28 und 29 zeigen ein weiteres erfindungsgemäßes Ausführungsbeispiel, bei welchem eine Radfelge mit größerem Durchmesser dargestellt ist. Die Radfelge umfaßt ein Felgenbett 122, welches durch zwei miteinander verbundene Radplatten (Felgenscheiben) 120, 121 gebildet ist. Weiterhin weist die Radfelge eine zylindrische Lageraufnahme 123 auf. Zur Verstärkung sind Sicken oder Einprägungen 128 vorgesehen, welche, wie in Figur 4 gezeigt, sternförmig angeordnet sein können. Insofern entspricht der Aufbau der Radfelge den vorbeschriebenen Ausführungsbeispielen.

Die beiden Radplatten (Felgenscheiben) 120, 121 sind nur durch formschlüssige Umbördelungen nicht jedoch durch Schweißen miteinander verbunden. Zu diesem Zwecke weist das Rad fünf Lochprägungen oder Ausnehmungen 125 auf. Wie insbesondere aus Figur 3 ersichtlich ist, sind die Ausnehmungen 125 bei der obenliegenden Felgenscheibe 120 mit einem größeren Durchmesser ausgebildet als bei der untenliegenden Felgenscheibe 121. Dadurch ist es möglich, den Rand der untenliegenden Felgenscheibe umzubördeln (s. Bezugszeichen 126). Gleiches gilt für den Bereich der zylindrischen Lageraufnahme 123, auch dort ist eine Umbördelung 127 vorgesehen. Das Ausführungsbeispiel zeigt, daß es möglich ist, die beiden Felgenscheiben 120, 121 aneinander zu fixieren, ohne daß zusätzliche Befestigungsmittel (Bolzen, Schrauben) oder Verschweißungen benötigt werden. Die Fixierung erfolgt ausschließlich durch die Bördelränder 126, 127. Es versteht sich, daß die Ausnehmungen 125 in ihrer Form, Anordnung und Dimensionierung den jeweiligen Anforderungen angepaßt werden können.

Auch das in den Figuren 28 und 29 gezeigte Ausführungsbeispiel ermöglicht es, jeweils beliebige, unterschiedliche Lagerkörper in die zylindrische Lageraufnahme einzusetzen, sodaß die Radfelge selbst als vorgefertigtes, standardisiertes Bauteil gefertigt werden kann. Durch die beschriebene Ausgestaltungsform ist es auch möglich, sehr große Räder zu fertigen, welche ausreichend stabil sind.

## Patentansprüche

1. Radfelge mit fest miteinander verbundenen Felgenscheiben (11, 12) aus Blech, mit einem radial außenseitigen Felgenbett und einer zentrischen Lageraufnahme, dadurch gekennzeichnet, daß in der Lageraufnahme (14) radial nach innen ein Anlagering (15-17) in Form einer Lagertopfprägung aus Eigenblech einer der Felgenscheiben vorsteht, an den sich ein zweiteiliger, Laufflächen einer Nabe oder Achse bildender Nabenlagerkörper (23, 30, 41-43, 46) anlegt.

2. Radfelge nach Anspruch 1, dadurch gekennzeichnet, daß die Lageraufnahmen zur Felgenmitte hin liegend angeformt sind.

3. Radfelge nach Anspruch 1 oder 2, dadurch gekennzeichnet, daß der Nabenlagerkörper (23, 30, 41-43, 46) aus zwei spiegelbildlich ausgebildeten Teilen besteht.

4. Radfelge nach Anspruch 1 oder 2, dadurch gekennzeichnet, daß der Nabenlagerkörper aus zwei unsymmetrischen Einzelteilen (30, 31) gebildet ist.

5. Radfelge nach einem der Ansprüche 1 bis 4, dadurch gekennzeichnet, daß der Nabenlagerkörper (23, 30, 41-43, 46) zur Aufnahme unterschiedlich geformter Naben, Achsen oder dergleichen ausgebildet ist.

6. Radfelge nach einem der Ansprüche 1 bis 5, dadurch gekennzeichnet, daß der Nabenlagerkörper mit Ringkammern (27) ausgestattet ist.

7. Radfelge nach einem der Ansprüche 1 bis 6, dadurch gekennzeichnet, daß der Nabenlagerkörper rund, sechs- oder achteckig ausgebildet und mit radialen Rippen (19) ausgestattet ist.

8. Radfelge nach einem der Ansprüche 6 oder 7, dadurch gekennzeichnet, daß jede Ringkammer (27) zum Anlagering (14) offen ist.

9. Radfelge nach einem der Ansprüche 1 bis 8, dadurch gekennzeichnet, daß der Nabenlagerkörper (24) mit nach außen vorstehenden Ringwulsten (25) ausgebildet ist, die an dem benachbarten Felgenbett (13, 26) anliegen.

10. Radfelge nach einem der Ansprüche 1 bis 9, dadurch gekennzeichnet, daß der Nabenlagerkörper (24) mit inneren Dichtringen (29) ausgestattet ist.

11. Radfelge nach einem der Ansprüche 1 bis 10, dadurch gekennzeichnet, daß die Felgenscheiben (11, 12) mittels Umbördelungen (33-37) im Bereich der Anlageringe (15-17) fest miteinander verbunden sind.

12. Radfelge nach einem der Ansprüche 1 bis 11, dadurch gekennzeichnet, daß die Felgenscheiben (120, 121) weitere Ausnehmungen (125) aufweisen, deren Randbereiche durch Bördelränder (126) miteinander verbunden sind.

13. Radfelge nach Anspruch 12, dadurch gekennzeichnet, daß einander zugeordnete Ausnehmungen (125) mit unterschiedlichen Durchmessern ausgebildet sind und daß der Randbereich der kleineren Ausnehmung den Bördelrand bildet.

14. Radfelge nach einem der Ansprüche 1 bis 13, dadurch gekennzeichnet, daß die Felgenscheiben (11, 12) mittels U- oder H-förmiger Spannringe (38) miteinander verbunden sind.

15. Radfelge nach einem der Ansprüche 1 bis 14, dadurch gekennzeichnet, daß der Nabenlagerkörper (23, 30, 41-43, 46) aus Kunststoff gespritzt ist.

16. Radfelge nach einem der Ansprüche 1 bis 14, dadurch gekennzeichnet, daß der Nabenlagerkörper (23, 30, 41-43, 46) aus Leichtmetall gefertigt ist.

17. Radfelge nach einem der Ansprüche 1 bis 14, dadurch gekennzeichnet, daß der Nabenlagerkörper (23, 30, 41-43, 46) aus Sintermetall gefertigt ist.

## Claims

1. A rim having rim discs (11, 12) made of sheet metal securely connected to one another, having a radial outer rim base and a central bearing seat,
**characterised in that** in the bearing seat (14) a contact ring (15-17) in the form of a bearing cup boss made of actual sheet of one of the rim discs radially inwardly extends, against which a two-part hub bearing member (23, 30, 41-43, 46) forming bearing faces of a hub or axle lies.

2. A rim according to Claim 1,
**characterised in that** the bearing seats are formed lying towards the rim centre.

3. A rim according to Claim 1 or 2,
**characterised in that** the hub bearing member (23, 30, 41-43, 46) consists of two parts with a mirror-inverted construction.

4. A rim according to Claim 1 or 2,
**characterised in that** the hub bearing member is formed from two asymmetrical individual parts (30, 31).

5. A rim according to one of Claims 1 to 4,
**characterised in that** the hub bearing member (23, 30, 41-43, 46) is constructed to receive differently shaped hubs, axles or the like.

6. A rim according to one of Claims 1 to 5,
**characterised in that** the hub bearing member is equipped with annular chambers (27).

7. A rim according to one of Claims 1 to 6,
**characterised in that** the hub bearing member has a round, hexagonal or octagonal construction and is equipped with radial ribs (19).

8. A rim according to one of Claims 6 or 7,
**characterised in that** each annular chamber (27) is open to the contact ring (14).

9. A rim according to one of Claims 1 to 8,
**characterised in that** the hub bearing member (24) is constructed with outwardly protruding annular rings (25), which abut the adjacent rim base.

10. A rim according to one of Claims 1 to 9,
**characterised in that** the hub bearing member (24) is equipped with inner sealing rings (29).

11. A rim according to one of Claims 1 to 10,
**characterised in that** the rim discs (11, 12) are securely connected to one another by means of beads (33-37) in the region of the contact rings (15-17).

12. A rim according to one of Claims 1 to 11,
**characterised in that** the rim discs (120, 121) have further recesses (125), the edge regions of which are connected to one another by beaded edges (126).

13. A rim according to Claim 12,
**characterised in that** recesses (125) associated with one another are constructed with different diameters,
**and in that** the edge region of the smaller recess forms the beaded edge.

14. A rim according to one of Claims 1 to 13,
**characterised in that** the rim discs (11, 12) are connected to one another by means of U-shaped or H-shaped clamping rings (38).

15. A rim according to one of Claims 1 to 14,
**characterised in that** the hub bearing member (23, 30, 41-43, 46) is injected from plastic.

16. A rim according to one of Claims 1 to 14,
**characterised in that** the hub bearing member (23, 30, 41-43, 46) is produced from light metal.

17. A rim according to one of Claims 1 to 14,
**characterised in that** the hub bearing member (23, 30, 41-43, 46) is produced from sintered metal.

## Revendications

1. Jante de roue en tôle avec des voiles de jante (11, 12) fixés l'un à l'autre, comportant une base de jante s'étendant radialement vers l'extérieur et un logement de palier central, caractérisée en ce que, dans le logement de palier (14), un anneau d'appui dépasse d'un des voiles de jante, anneau d'appui (15 à 17) s'étendant radialement vers l'intérieur et ayant la forme d'un chapeau de palier en tôle, contre lequel s'appuie un corps de palier de moyeu (23, 30, 41 à 43, 46) en deux parties et formant des surfaces de roulement d'un moyeu ou d'un axe.

2. Jante de roue selon la revendication 1, caractérisée en ce que les logements de palier sont formés de façon à s'étendre horizontalement vers le centre de la jante.

3. Jante de roue selon l'une des revendications 1 ou 2, caractérisée en ce que le corps de palier de moyeu (23, 30, 41 à 43, 46) est constitué de deux pièces construites symétriquement.

4. Jante de roue selon la revendication 1 ou 2, caractérisée en ce que le corps de palier de moyeu est formé de deux pièces détachées (30, 31) non symétriques.

5. Jante de roue selon l'une des revendications 1 à 4, caractérisée en ce que le corps de palier de moyeu (23, 30, 41 à 43, 46) est conçu pour loger des moyeux, axes ou autres ayant différentes formes.

6. Jante de roue selon l'une des revendications 1 à 5, caractérisée en ce que le corps de palier de moyeu est muni de chambres annulaires (27).

7. Jante de roue selon l'une des revendications 1 à 6, caractérisée en ce que le corps de palier de moyeu est conçu sous forme circulaire, d'hexagone ou d'octogone et est muni de nervures radiales (19).

8. Jante de roue selon l'une des revendications 6 ou 7, caractérisée en ce que chaque chambre annulaire (27) est ouverte vers l'anneau d'appui (14).

9. Jante de roue selon l'une des revendications 1 à 8, caractérisée en ce que le corps de palier de moyeu (24) est construit avec des bourrelets annulaires (25), dépassant vers l'extérieur, qui s'appuient contre la base de jante (13, 26) voisine.

10. Jante de roue selon l'une des revendications 1 à 9, caractérisée en ce que le corps de palier de moyeu (24) est muni d'anneaux d'étanchéité (29) intérieurs.

11. Jante de roue selon l'une des revendications 1 à 10, caractérisée en ce que les voiles de jante (11, 12) sont fixés l'un à l'autre au moyen de bords rabattus (33 à 37) dans la zone des anneaux d'appui (15 à 17).

12. Jante de roue selon l'une des revendications 1 à 11, caractérisée en ce que les voiles de jante (120, 121) comportent d'autres évidements (125) dont les bords sont reliés ensemble par des collets rabattus (126).

13. Jante de roue selon la revendication 12, caractérisée en ce que des évidements (125) associés l'un à l'autre sont construits avec des diamètres différents et en ce que le bord du plus petit évidement forme le collet rabattu.

14. Jante de roue selon l'une des revendications 1 à 13, caractérisée en ce que les voiles de jante (11, 12) sont reliés ensemble par des anneaux tendeurs (38) en forme de U ou de H.

15. Jante de roue selon l'une des revendications 1 à 14, caractérisée en ce que le corps de palier de moyeu (23, 30, 41 à 43, 46) est fabriqué en plastique au moyen d'un moulage par injection.

16. Jante de roue selon l'une des revendications 1 à 14, caractérisée en ce que le corps de palier de moyeu (23, 30, 41 à 43, 46) est fabriqué en alliage léger.

17. Jante de roue selon l'une des revendications 1 à 14, caractérisée en ce que le corps de palier de moyeu (23, 30, 41 à 43, 46) est fabriqué en métal fritté.
